# EUROPÄISCHE PATENTSCHRIFT

(11) **EP 0 354 464 B1**
(45) Veröffentlichungstag und Bekanntmachung des Hinweises auf die Patenterteilung: **01.03.1995**
(21) Anmeldenummer: 89114287.9
(22) Anmeldetag: 02.08.1989
(51) Int. Cl.: F16J 15/12

(54) **Flachdichtung**
Flat packing
Joint plat

(30) Priorität: 11.08.1988 DE 3827324
(43) Veröffentlichungstag der Anmeldung: 14.02.1990
(73) Patentinhaber: REINZ-DICHTUNGS-GMBH, 89233 Neu-Ulm (DE)
(72) Erfinder: Göhrlich, Bruno, D-7912 Weissenhorn (DE); Höhe, Kurt, D-7907 Langenau (DE)
(74) Vertreter: Weber, Otto Ernst, Dipl.-Phys.

(56) Entgegenhaltungen:
- DE-A- 3 705 031
- GB-A- 2 092 244
- US-A- 3 565 449
- US-A- 4 376 539

## Beschreibung

Die Erfindung betrifft eine Flachdichtung gemäß Oberbegriff des Anspruchs 1. Ein derartige Flachdichtung ist aus der US-A-4 376 539 bekannt.

Eine andere Flachdichtung ist aus der DE 37 05 031 A1 bekannt. Bei dieser Flachdichtung, die auch zum Einbau zwischen dem Zylinderblock und dem Zylinderkopf eines Verbrennungsmotors bestimmt ist, wird das metallische Dichtelement am Außenumfang, der zum Weichstoffmaterial zeigt, mit einer konkaven Kontur ausgestattet. Zur Befestigung des metallischen Dichtelementes mit der Dichtungsscheibe aus Weichstoffmaterial ist jedoch der Rand des Dichtungsdurchganges im Weichstoffmaterial zunächst mit einem U-förmigen profilierten Blechring umkleidet. Die U-Schenkel des Blechringes liegen dabei auf der oberen bzw. unteren Seite des Weichstoffmaterials, so daß die etwas konvex gewölbte radiale Innenfläche des Blechringes mit dem konkaven Randbereich des metallischen Dichtelementes weitgehend formschlüssig in Eingriff gelangt.

Eine weitere Flachdichtung ist als Zylinderkopfdichtung aus der US-PS 3,565,449 bekannt. Das metallische Dichtelement besteht dort aus einem ringförmigen Element mit einem kreisrunden massiven Profil, welches von einem U-förmigen profilierten Blechring gehalten wird. Diese Dichtung ist jedoch technisch sehr aufwendig und dementsprechend relativ teuer.

Weitere Lösungsalternativen, z.B. ein Verkleben zwischen dem metallischen Dichtelement und dem Weichstoffmaterial, oder eine Einfassung des metallischen Dichtelementes mittels eines Blechringes sind ebenfalls bekannte Techniken.

Speziell im Hinblick auf die eingangs genannte Lösung kann die Verbindung von drei Materialien, nämlich Weichstoffmaterial, Blecheinfassung, metallischer Dichtring, als nachteilig angesehen werden. Zum einen bedarf es durch den Blechring eines weiteren Elements, was mit Herstellkosten, Lagerkosten, Montagekosten in die Gesamtkosten der Flachdichtung eingeht. Je geringer jedoch die Anzahl der Einzelteile der Flachdichtung ist, desto weniger Bauteile sind im Hinblick auf die Qualität zu prüfen, da bei derartigen Flachdichtungen hohe Qualitätsanforderungen bestehen. Diese Qualitätsanforderung ist insofern verständlich, nachdem bei einem Defekt an derartigen Flachdichtungen hohe Folgekosten durch den Ausfall des Gesamtproduktes entstehen können.

Zum anderen reduziert sich selbstverständlich bei einer geringeren Bauteilanzahl der Montageaufwand in der Herstellung der Flachdichtung. Auch können bei der bekannten Flachdichtung mit U-förmigem Blechring Tolerenzprobleme bei der Materialdicke der gesamten Flachdichtung auftreten.

Ausgehend vom vorgenannten Stand der Technik und den aufgezeigten Nachteilen liegt daher der Erfindung die **Aufgabe** zugrunde, eine gattungsgemäße Flachdichtung mit möglichst wenigen Bauteilen und relativ geringem Fertigungsaufwand auch bei engen Toleranzen herstellen zu können.

Diese Aufgabe wird erfindungsgemäß durch die Merkmale des kennzeichnenden Teils des Anspruchs 1 gelöst.

Ein wesentlicher Kerngedanke kann darin gesehen werden, das metallische Dichtelement an seinem Außenumfang mit mehreren Laschen oder Nasen zu versehen, die zur Befestigung des Dichtelementes mit der aus Weichstoffmaterial bestehenden Dichtungsscheibe dienen. Zweckmäßigerweise wird die Lasche mit einer geringeren Materialstärke ausgelegt, so daß über eine Kombination von An- oder Einpressung und formschlüssiger Verbindung eine gute Lagefixierung des metallischen Dichtelementes in der Dichtungsscheibe erreicht werden kann. Die Materialschwächung der Lasche hat zudem den Vorteil, daß kein allzu starkes Verpressen durchgeführt werden muß und zum anderen eine weitgehend fluchtende Hauptebene im wesentlichen auf beiden Seiten der Flachdichtung erreicht wird.

Zweckmäßigerweise ist das Dichtelement als massiver einstückiger Ring und die Laschen mit geringerer Materialstärke als der Ring ausgebildet.

Als Weichstoffmaterial kann beispielsweise ein relativ nachgiebiges Dichtungsmaterial, wie metall-kaschierter Asbest, oder ein vergleichbares Material verwendet werden, z.B. It-Material.

Vorteilhafterweise werden einstückig am Außenumfang des metallischen Dichtelementes, der üblicherweise Ringstruktur hat, Laschen vorgesehen.
Bei dieser Art des metallischen Dichtelementes mit einstückigen Laschen sind in fertigungstechnischer Hinsicht nur folgende Verfahrensschritte erforderlich. Der metallische Dichtring wird zusammen mit den symmetrisch oder teilweise unsymmetrisch angeordneten Laschen ausgestanzt. Die Laschen werden durch Kaltfließpressen in ihrer Materialstärke reduziert, z.B. etwa auf die Hälfte oder einem Drittel der Materialstärke des metallischen Dichtelementes. Das durch das Kaltfließpressen verdrängte Blechmaterial der Lasche wird abgestanzt. Zur Lagefixierung der Laschen und des metallischen Dichtringes ist eine weitgehend formschlüssige Verbindung von z.B. der Hauptfläche, die dem Zylinderkopf gegenüberliegt, auf die andere Hauptfläche, die am Motorblock aufliegt, vorgesehen. Die Laschen werden hierzu in entsprechender Abstimmung mit den Öffnungen, durch die sie gekröpft oder S-förmig geführt werden, aufgebogen.

Fertigungstechnisch hat es sich im Hinblick auf eine sichere Zuordnung der Flächen als besonders vorteilhaft erwiesen, zumindest eine von vier, sonst symmetrisch am Außenumfang des metallischen Dichtelementes vorgesehenen Laschen, unsymmetrisch vorzusehen. Hierdurch ist gewährleistet, daß montagemäßig kein seitenverkehrtes Einsetzen des Dichtelementes in den Dichtungsdurchgang der Dichtungsscheibe erfolgen kann. Dies ist vor allen Dingen im Hinblick auf profilierte Dichtungsbereiche des metallischen Dichtringes und den Einpreßvorgang der Laschen mit der Dichtungsscheibe,um eine Lagefixierung und weitgehend fluchtende Hauptflächen erreichen zu können, wesentlich.

Die Materialreduzierung der Laschen in Verbindung mit den weitgehend fluchtenden Hauptebenen stellt sicher, daß im Einsatzzustand keine erhöhten und störenden ungleichmäßige Verspannungskräfte, z.B. zwischen Zylinderkopf und Motorblock, auftreten. Die Verbindungsstelle zwischen Laschen und dem Weichstoffmaterial ist im Hinblick auf die Materialstärke daher so ausgelegt, daß keine bleibenden Verformungen der Bauteile auftreten.

Da die vorausgehend aufgezeigte Verbindungstechnik zwischen einem metallischen Dichtungsring und dem angrenzenden Weichstoffmaterial hauptsächlich der genauen Anordnung des Dichtelementes im Weichstoffmaterial dient und vor allen Dingen transport- und montagesicher sein muß, da eine Dichtfunktion davon nach dem Zusammenbau des Motorblockes mit dem Zylinderkopf nicht ausgehen muß, ist für diese Funktion eine äußerst einfache, kostengünstige und zuverlässige handhabbare Flachdichtung geschaffen.

Die Erfindung wird nachstehend anhand eines Beispiels und schemaischer Zeichnungen noch näher erläutert. Es zeigen:
- Fig. 1: eine Draufsicht auf die Zylinderkopfseite einer bruchstückartig dargestellten Flachdichtung mit einem ringförmigen metallischen Dichtelement und
- Fig. 2: einen bruchstückartigen Vertikalschnitt längs der Linie A-B nach Fig. 1 in einer Zusammenbauphase von Motorblock und Zylinderkopf.

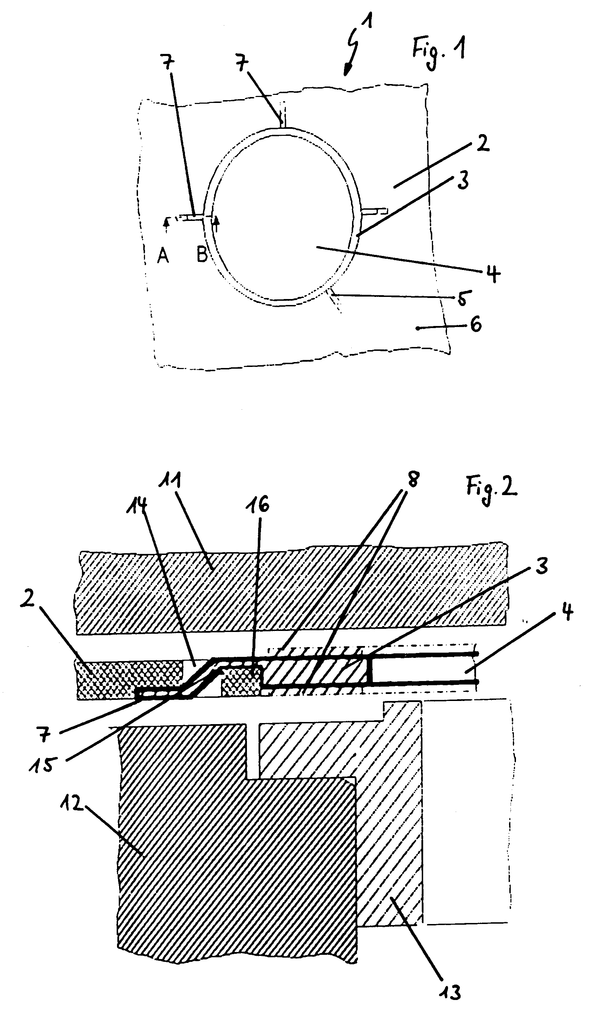

In Fig. 1 ist in Draufsicht auf die dem Zylinderkopf zugewandte Seite eine erfindungsgemäße Flachdichtung 1 dargestellt. Die Flachdichtung 1 besteht aus einer Dichtungsscheibe 2 aus Weichstoffmaterial. Die Dichtungsscheibe 2 weist einen kreisförmigen Dichtungsdurchgang 4 auf, der im wesentlichen dem Außendurchmesser einer Zylinderlaufbuchse 13 (s. Fig. 2) entspricht. Die Flachdichtung 1 ist im Sinne der bevorzugten Anwendung im Beispiel auch als Zylinderkopfdichtung schematisch dargestellte. Paßgenau in diesen kreisförmigen Dichtungsdurchgang 4 ist der metallische Dichtungsring 3 eingesetzt.

Dieser metallische Dichtungsring 3 weist an seinem Außenumfang vier Dichtungslaschen 7,5 auf, von denen die Dichtungslasche 5 unsymmetrisch, etwa einer im Winkel von 70° im Beispiel gegenüber der nächstliegenden Dichtlasche 7 angeordnet ist.

Die unsymmetrische Anordnung der Dichtlasche 7 kennzeichnet daher unverwechselbar die genaue Anordnung, in der der metallische Dichtungsring 3 in den Dichtungsdurchgang 4 eingesetzt wird.

Unter Einbeziehung des Vertikalschnittes längs der Linie A-B nach Fig. 2 ist erkennbar, daß die Dichtlasche 7 auf der Zylinderkopfseite der Flachdichtung 1 fluchtend vom metallischen Dichtring 3 ausgeht. Die Dichtlasche 7 weist eine wesentlich geringere Materialstärke von beispielsweise einem Drittel der Materialstärke des Dichtringes 3 auf.

Der metallische Dichtring 3 wird zusammen mit seinen Dichtlaschen 7 im Stanzvorgang erstellt. Die Materialschwächung der Dichtlasche 7 erfolgt üblicherweise im Fließpreßverfahren mit anschließendem Abstanzen auf das Endmaß. Daran schließt sich das Umformen der Dichtlasche 7 paßgenau mit einer im Randbereich der Dichtscheibe 2 vorgesehenen Öffnung 14 an. Durch diese paßgenaue Übereinstimmung ist es möglich, den metallischen Dichtring 3 im Beispiel nach Fig. 2 von der Zylinderkopfseite her in die Öffnung für den Dichtdurchgang 1 einzusetzen. Mit einem anschließenden Einpreß- bzw. Flachpreßvorgang erfolgt ein Abkröpfen bzw. eine S-förmige formschlüssige Verbindung über die Öffnung 14 mit der motorblockseitigen Fläche der Dichtungsscheibe 2. Die Hauptflächen der Dichtungsscheibe sind auch nach dem Einpreßvorgang mit dem Dichtungsring 3 einschließlich den Dichtungslaschen 3 fluchtend, so daß bei der Festlegung des Zylinderkopfes 11 gegenüber dem Motorblock 12 keine Verspannungskräfte aufgrund einer im wesentlichen unterschiedlichen Materialstärke der Flachdichtung 1 auftreten.

In der Gesamtdarstellung nach Fig. 2 ist im unteren Teil der Motorblock 12 bruchstückartig dargestellt, in den beispielsweise eine Zylinderlaufbuchse 13 bereits eingesetzt ist. Die Materialverdünnung 15 der Dichtlasche 7 liegt auf der Zylinderkopfseite und das auslaufende Ende der Dichtlasche 7 auf der Motorblockseite. Eine seitenverkehrte Anordnung dieser formschlüssigen Verbindung zwischen den Dichtlaschen 7,5 des metallischen Dichtringes 3 und der Dichtungsscheibe 2 ist. denkbar. Auf beiden Seiten des Dichtringes 3 sind profilierte Bereiche 8 angedeutet. Diese profilierten Bereiche 8 können beispielsweise erhöhte und vertiefte Metallbereiche sein, die eine verbesserte Abdichtung gewährleisten sollen.

Die Dichtungsscheibe weist üblicherweise eine gleiche Materialstärke auf, da die Elastizität des Weichstoffmaterials eine ausreichende Materialverpressung im Hinblick auf einen fluchtenden, formschlüssigen Eingriff zwischen den Dichtlaschen 7,5 und der Dichtungsscheibe gewährleisten. Es können jedoch zur weiteren Verbesserung geringfügig reduzierte Materialstärken in diesem Bereich der formschlüssigen Verbindung mit den Dichtlaschen vorhanden sein.

## Patentansprüche

1. Flachdichtung, insbesondere Zylinderkopfdichtung für Verbrennungsmotoren,
mit einer Dichtungsscheibe aus einem Weichstoffmaterial (2), die mindestens einen Dichtungsdurchgang aufweist, der etwa fluchtend von einem metallischen Dichtelement begrenzt ist, welches die Stärke des Weichstoffmaterials aufweist, wobei das metallische Dichtelement als Dichtring (3) ausgebildet und lagefixiert gegenüber dem Weichstoffmaterial vorgesehen ist und wobei am Außenumfang des metallischen Dichtelements mehrere etwa radial abstehende Laschen (5,7) vorgesehen sind, die im Weichstoffmaterial lagefixiert sind,
dadurch **gekennzeichnet,**
daß die Laschen (5,7) mit einer geringeren Materialstärke als der Dichtring (3) einstückig daran angeformt sind und mit dem Weichstoffmaterial formschlüssig verbunden sind, und daß die Laschen (5,7) von der Zylinderkopfseite des Dichtrings (3) gekröpft durch jeweils eine Öffnung (14) im Weichstoffmaterial zur anderen Seite des Weichstoffmaterials angeordnet sind.

2. Flachdichtung nach Anspruch 1,
dadurch **gekennzeichnet**,
daß die Laschen (5,7) im Weichstoffmaterial eingepreßt und/oder damit weitgehend formschlüssig verbunden sind.

3. Flachdichtung nach Anspruch 1 oder 2,
dadurch **gekennzeichnet**,
daß nach Lagefixierung der Laschen (5,7) des metallischen Dichtelementes (3) die Hauptflächen des Weichstoffmateriais und des metallischen Dichtelementes (3) im wesentlichen fluchten.

4. Flachdichtung nach einem der Ansprüche 1 bis 3,
dadurch **gekennzeichnet**,
daß mindestens eine der Laschen (5) in Bezug zu den benachbarten Laschen (7) unsymmetrisch am Außenumfang des metallischen Dichtelementes (3) vorgesehen ist.

5. Flachdichtung nach einem der Ansprüche 1 bis 4,
dadurch **gekennzeichnet**,
daß die Laschen (5,7) einstückig, z.B. durch Stanzen, am metallischen Dichtelement (3) angeformt sind.

6. Flachdichtung nach einem der Ansprüche 1 bis 5,
dadurch **gekennzeichnet**,
daß die Laschen (5,7) zylinderkopfseitig mit dem Dichtelement (3) fluchten und auf der Motorblockseite materialstärkereduziert, z.B. mittels Kaltfließpressen, sind.

7. Flachdichtung nach einem der Ansprüche 1 bis 6,
dadurch **gekennzeichnet**,
daß das Dichtelement (3) als massiver einstückiger Ring ausgebildet ist, und daß die Laschen (5,7) eine geringere Materialstärke als der Ring haben.

## Claims

1. Flat gasket, in particular a cylinder head gasket for combustion engines,
with a gasket ring made from a soft material (2) and having at least one sealing passage, which is bounded in roughly aligned manner by a metallic sealing element with the thickness of the soft material and the metallic gasket element is constructed as gasket ring (3) and provided positionally fixed opposite of the soft material and on the outer circumference of the sealing element several, roughly radially projecting projections (5, 7) are positionally fixed in the soft material
**characterized** in that
the projections (5, 7) and the gasket ring (3) are formed as one piece, the projections (5, 7) being thinner than the gasket ring (3), and are connected positively to the soft material, and that the projections (5, 7) are positioned from the cylinder head side of the gasket ring (3) through one opening (14) in the soft material respectively to the other side of the soft material.

2. A flat gasket according to claim 1,
**characterized** in that
the projections (5, 7) are pressed into the soft material and/or substantially postively connected to it.

3. A flat gasket according to claim 1 or 2,
**characterized** in that
the projections (5, 7) of the metallic sealing element (3), the main surfaces of the soft material and the metallic sealing element (3) are substantially aligned following the positional fixing of th projections.

4. A flat gasket according to any of the claims 1 to 3,
**characterized** in that
at least one of the projections (5) is arranged, asymmetrically on the outer circumference of the metallic sealing element (3) with respect to the adjacent projections (7).

5. A flat gasket according to any of the claims 1 to 4,
**characterized** in that
the projections (5, 7) are shaped in one piece on the sealing element (3) e.g. by punching.

6. A flat gasket according to any of the claims 1 to 5,
**characterized** in that
the projections (5, 7) are aligned on the cylinder head side with the sealing element (3) and on the engine frame side undergo a material thickness reduction, e.g. by cold extrusion.

7. A flat gasket according to any of the claims 1 to 6,
**characterized** in that
the sealing element (3) is constructed as a solid, one-piece ring and that the projections (5, 7) and the projections have a smaller material thickness than the ring.

## Revendications

1. Joint plat, en particulier joint de tête de cylindre pour des moteurs à combustion, avec un disque d'étanchéité dans un matériau mou (2), qui présente au moins un passage d'étanchéité, qui est délimité approximativement en alignement par un élément d'étanchéité métallique, lequel présente l'épaisseur du matériau mou, l'élément d'étanchéité métallique étant constitué d'un anneau d'étanchéité (3) et étant prévu en position fixe par rapport au matériau mou et, sur le pourtour extérieur de l'élément d'étanchéité métallique, plusieurs pattes (5, 7) réparties approximativement dans le sens radial, qui sont fixées en position dans le matériau mou, ***caractérisé en ce que*** les pattes (5, 7) sont formées d'un seul tenant avec l'anneau d'étanchéité (3) avec une épaisseur de matière inférieure à celui-ci, et sont reliées en engagement positif avec le matériau mou, et ***en ce que*** les pattes (5, 7) sont disposées depuis le côté tête de cylindre de l'anneau d'étanchéité (3) de manière coudée à travers chacune une ouverture (14) dans le matériau mou, en direction de l'autre côté du matériau mou.

2. Joint plat selon la Revendication 1, ***caractérisé en ce que*** les pattes (5, 7) sont pressées dans le matériau mou et/ou sont reliées à celui-ci dans une large mesure en engagement positif.

3. Joint plat selon la Revendication 1 ou 2, ***caractérisé en ce que*** les pattes (5, 7) de l'élément d'étanchéité métallique (3) sont essentiellement alignées sur la surface principale du matériau mou et de l'élément d'étanchéité métallique (3).

4. Joint plat selon l'une des Revendications 1 à 3, ***caractérisé en ce qu***'au moins une des pattes (5, 7), par rapport aux pattes voisines (7), est prévue asymétrique sur le pourtour extérieur de l'élément d'étanchéité métallique (3).

5. Joint plat selon l'une des Revendications 1 à 4, ***caractérisé en ce que*** les pattes (5, 7) sont formées d'un seul tenant, par exemple par estampage, sur l'élément d'étanchéité métallique (3).

6. Joint plat selon l'une des Revendications 1 à 5, ***caractérisé en ce que*** les pattes (5, 7), du côté de la tête de cylindre, sont alignées avec l'élément d'étanchéité (3) et, du côté du bloc moteur, sont réduites en épaisseur de matière, par exemple par fluage à froid.

7. Joint plat selon l'une des Revendications 1 à 6, ***caractérisé en ce que*** l'élément d'étanchéité (3) est constitué d'un anneau massif d'un seul tenant, et ***en ce que*** les pattes (5, 7) ont une épaisseur de matière inférieure à l'anneau.
